# EUROPÄISCHE PATENTSCHRIFT

(11) **EP 3 548 842 B1**
(45) Veröffentlichungstag und Bekanntmachung des Hinweises auf die Patenterteilung: **16.12.2020**
(21) Anmeldenummer: 17825755.6
(22) Anmeldetag: 29.11.2017
(51) Int. Cl.: G01C 11/04, G01C 11/06, G01S 13/86, G06T 7/30, G01S 13/90, G06T 7/33

(54) **VERFAHREN UND VORRICHTUNG ZUR GEOREFERENZIERUNG VON LUFTBILDDATEN MIT HILFE VON SAR-BILDDATEN**
METHOD AND DEVICE FOR GEOREFERENCING OF AERIAL IMAGE DATA BY MEANS OF SAR IMAGE DATA
PROCÉDÉ ET DISPOSITIF POUR GEO-RÉFÉRENCE DES DONNÉES D'IMAGE AÉRIENNE AU MOYEN DES DONNÉES D'IMAGE DU RADAR À SYNTHÈSE D'OUVERTURE

(30) Priorität: 01.12.2016 DE 102016123286
(43) Veröffentlichungstag der Anmeldung: 09.10.2019
(73) Patentinhaber: Deutsches Zentrum für Luft- und Raumfahrt e.V., 51147 Köln (DE)
(72) Erfinder: RUNGE, Hartmut, 81377 München (DE); KRAUSS, Thomas, 86830 Schwabmünchen (DE)
(74) Vertreter: Rösler Rasch van der Heide & Partner
(86) Internationale Anmeldenummer: PCT/EP2017/080782
(87) Internationale Veröffentlichungsnummer: WO 2018/099949

(56) Entgegenhaltungen:
- WO-A1-2010/057903
- US-A1- 2012 127 028

## Beschreibung

Die Erfindung betrifft Verfahren sowie Vorrichtungen zur Georeferenzierung von Luftbilddaten.

Unter dem Begriff "Luftbilddaten" werden vorliegend Bilddaten verstanden, die von einem in der Atmosphäre befindlichen bzw. sich dort bewegenden Träger oder von einem Satelliten mittels eines Aufnahmesystems, insbesondere mittels eines optischen Aufnahmesystems/Abbildungssystem erfasst wurden.

Unter dem Begriff "Georeferenzierung" wird vorliegend die Zuweisung koordinatenbezogener Informationen zu den jeweiligen Bilddaten (Pixeln) verstanden. Die koordinatenbezogenen Informationen beziehen sich insbesondere auf Geokoordinaten.

Aus der US2012/127028 A1 ist ein Verfahren zur Georeferenzierung optischer Fernerkundungsbilder eines Erdoberflächenbereichs bekannt, bei dem die Georeferenzierung aufgrund eines SAR-Bildes, das georeferenziert ist, korrigiert wird.

Die Aufgabe der vorliegenden Erfindung ist es, ein verbessertes Verfahren sowie eine verbesserte Vorrichtung zur Georeferenzierung von Luftbilddaten anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft ein Verfahren zur Georeferenzierung von bereitgestellten Luftbilddaten, die mit einem Abbildungssystem aufgenommen wurden und in denen ein Teil der Erdoberfläche abgebildet ist, wobei eine Georeferenzierung der Luftbilddaten auf Basis bereitgestellter georeferenzierte SAR-Bilddaten erfolgt, in denen derselbe Teil der Erdoberfläche abgebildet ist.

Das optische Abbildungssystem umfasst vorzugsweise eine Kamera und/oder eine Videokamera und/oder eine Stereokamera und/oder eine 3D Kamera und/oder ein Laserabtastsystem, etc., wobei das Abbildungssystem vorzugsweise Aufnahmen der Erdoberfläche im optisch sichtbaren Bereich, bzw. in den daran angrenzenden Frequenzbereichen ermöglicht.

Unter dem Begriff "SAR-Bilddaten" werden vorliegend Bilddaten verstanden, die mit einem Radar mit synthetischer Apparatur (engl. "SAR" für "**S**ynthetic **A**perture **R**adar") aufgenommen wurden. Radarsysteme zur Erzeugung der SAR-Bilddaten werden vorliegend auf Flugzeugen, Luftschiffen, Ballonen, Drohnen oder Satelliten eingesetzt, sie tasten die Erdoberfläche mit elektromagnetischen Wellen ab und erlauben eine zwei- oder dreidimensionale Darstellung des erfassten Ausschnitts der Erdoberfläche. Die bereitgestellten SAR-Bilddaten sind bereits georeferenziert. Dies erfolgt mit einem im Stand der Technik bekannten Verfahren. Diese Verfahren ermöglichen eine Georeferenzierungsgenauigkeit im Bereich von wenigen Zentimetern, insbesondere von 1-10 cm oder von 1-5 cm oder von 5-10 cm oder von 10-50 cm.

Vorteilhaft liegen die Luftbilddaten sowie die georeferenzierten SAR-Bilddaten jeweils als orthorektifizierte Bilddaten vor. Vorteilhaft sind die Luftbilddaten bereits zumindest grob georeferenziert.

Vorteilhaft sind die Luftbilddaten mit einem optischen Sensorsystem oder einem Radarsensorsystem oder einem anderen bildgebenden Sensorsystem aufgenommen, das an Bord eines Luftfahrzeugs, einer Drohne oder eines Satelliten angeordnet ist. Vorteilhaft sind SAR-Bilddaten mit einem SAR-System aufgenommen, das an Bord eines Luftfahrzeugs oder eines Satelliten angeordnet ist.

Das vorgeschlagene Verfahren gemäß einer ersten Alternative umfasst folgende Schritte. In einem Schritt erfolgt in den georeferenzierten SAR-Bilddaten ein Ermitteln von im Wesentlichen punktförmigen Radarsignaturen RS. Dabei wird vorteilhaft genutzt, dass Fußpunkte von auf der Erdoberfläche stehenden länglichen, mastartigen Objekten (bspw. Masten von Straßenlampen, Verkehrsschildern, Stromleitungen etc.) als Corner-Reflektoren wirken und somit in den bereitgestellten SAR-Bilddaten als im Wesentlichen punktförmige Objekte dargestellt werden, deren Positionsbestimmung mit einer Georeferenzierungsgenauigkeit im Bereich weniger Zentimeter möglich ist.

In einem weiteren Schritt erfolgt ein Bereitstellen des Sonnenstandes für die Aufnahmezeit der Luftbilddaten und den darin abgebildeten Teil der Erdoberfläche. Der Sonnenstand kann beispielsweise als Elevations- und Azimutwinkel für einen zentralen Punkt des jeweils betrachteten Erdoberflächenausschnitts oder für eine Vielzahl von Punkten auf dem jeweils betrachteten Erdoberflächenausschnitt bereitgestellt werden. Natürlich kann der Sonnenstand auch in einem Erd-Bezugskoordinatensystem oder in Ekliptikalkoordinaten / Äquatorialkoordinaten der Sonne oder in einem anderen geeigneten Koordinatensystem bereitgestellt werden.

In einem weiteren Schritt erfolgt in den Luftbilddaten basierend auf dem Sonnenstand zur Aufnahmezeit der Luftbilddaten ein Ermitteln von länglichen, insbesondere linien- oder balkenförmigen, in Sonnenstrahlrichtung erzeugten Schlagschatten SS, die von sich über die Erdoberfläche senkrecht erhebenden länglichen mastartigen Objekten erzeugt werden. Da zur Aufnahmezeit der Luftbilddaten der Sonnenstand und damit die Sonnenstrahlrichtung auf der abgebildeten Erdoberfläche bekannt ist, können in den Luftbilddaten längliche, insbesondere linien- oder balkenförmige Schlagschatten SS ermittelt werden die in Sonnenstrahlrichtung orientiert sind. Schlagschatten SS sind typischerweise dunkler abgebildet als dass die Schatten umgebende Gelände.

In einem weiteren Schritt erfolgt in den Luftbilddaten ein Ermitteln von der Sonne zugewandten Anfangspunkten AP der ermittelten Schlagschatten SS. Der Begriff "Anfangspunkt der AP" kann dabei mehrere Bildpixel umfassen. Dabei wird davon ausgegangen, dass der Schlagschatten, den ein mastartiges auf der Erdoberfläche senkrecht stehendes Objekt wirft, bis zum "Fußpunkt" des Objekts verläuft, wobei der "Fußpunkt" des Objekts der Bereich ist, mit dem das Objekt mit der Erdoberfläche abschließt.

In einem weiteren Schritt erfolgt ein Ermittelten von örtlich korrespondierenden punktförmigen Radarsignaturen RS und Anfangspunkten AP der Schlagschatten SS. Ausgangspunkt sind die Menge {RSᵢ} der Radarsignaturen RS und die Menge {APₙ} der Anfangspunkte AP. Um korrespondierende Punktepaare zu finden, wird zunächst vorteilhaft für jeden Punkt aus der Menge {RSᵢ} der nächstliegende Punkt aus der Menge {APₙ} zugeordnet. Vorteilhaft wird weiterhin ein Schwellwert definiert, der entscheidet, wie groß der Abstand zwischen den so entstandenen Punktepaaren maximal sein darf, sodass diese noch als korrespondierende Punkte gelten. Für das Finden solcher korrespondierenden Punktepaare gibt es verschiedene Algorithmen, mit unterschiedlichen Komplexitäten.

In einem weiteren Schritt erfolgt ein Registrieren der Luftbilddaten mit den SAR-Bilddaten auf Basis der korrespondierenden Radarsignaturen RS und Anfangspunkte AP. In einem weiteren Schritt erfolgt ein Übertragen der Georeferenzierung der SAR-Bilddaten auf die mit den SAR-Bilddaten registrierten Luftbilddaten. Das Registrieren der Luftbilddaten mit den SAR-Bilddaten erfolgt somit zunächst punktuell, wobei korrespondierende Radarsignaturen RS und Anfangspunkte AP miteinander registriert werden, anschließend wird vorteilhaft jedem weiteren Pixel der Luftbilddaten eine Georeferenzierung zugeordnet.

Das vorgeschlagene Verfahren basiert mithin darauf, in den Luftbilddaten die optischen Fußpunkte von sich vertikal von der Erdoberfläche erstreckenden mastähnlichen Objekten zu ermitteln, und diese Fußpunkte mit korrespondierenden punktförmigen Radarobjekten der SAR-Bilddaten zu registrieren. Die Ermittlung der Fußpunkte in den Luftbilddaten erfolgt erfindungsgemäß zunächst durch die Ermittlung von in Sonnenrichtung liegend abgebildeten Schlagschatten, die linien- oder mastähnliche Form aufweisen und anschließend durch die Ermittlung des der Sonne zugewandten Endes der jeweiligen Schlagschatten. Unter der Voraussetzung, dass die Schlagschatten jeweils vom Fußpunkt des linien- oder mastförmigen, auf der Erdoberfläche senkrecht stehenden Objekts ausgehen, legt das der Sonne zugewandtes Ende der jeweiligen Schlagschatten den jeweiligen Fußpunkt in den Luftbilddaten fest. Wie bereits vorstehend ausgeführt, wird der Fußpunkt in den SAR-Bilddaten durch im wesentlichen punktförmig dargestellte Radarobjekte wiedergegeben. Dies basiert darauf, dass ein sich vertikal von der Erdoberfläche erstreckendes linien- bzw. mastförmiges Objekt am Fuß mit der Erdoberfläche einen quasi rechten Winkel bildet, der als Corner-Reflektor wirkt.

Vorteilhaft eignen sich hierfür mastförmige Objekte mit Rotationssymmetrie. Derartige Masten werden in den SAR-Bilddaten als im wesentlichen scharfe Punkte abgebildet, wobei das Phasenzentrum ihrer Rückstreuung genau im (dem Sensor zugewandten) Fußpunkt des Mastes liegt. Durch ihre Rotationssymmetrie gibt es keine Abhängigkeit vom Radareinfallswinkel oder vom Aspektwinkel. Darüber hinaus erscheinen die Masten im Radarbild in der Regel sehr hell, da durch den Corner Reflektoreffekt, der sich durch die Doppelreflexion der Wellen mit dem Boden vor dem Mast ergibt, praktisch die gesamte rückgestreute Energie des Mastes in dem Fußpunkt des Mastes fokussiert ist.

In den Luftbilddaten können die Masten an ihrer länglichen Ausdehnung und ihren Schlagschatten erkannt werden. Oft ist neben dem Schlagschatten SS auch der den Schlagschatten erzeugende Mast selbst sichtbar, sodass sich eine V-förmige Struktur ergibt, die in den Luftbilddaten ermittelbar ist. Bei den Luftbilddaten ist unter Aufnahmezeitpunkt sowie die Position aus der die Aufnahme gemacht wurde typischerweise bis auf wenige Meter, vorteilhafterweise bis auf wenige Zentimeter genau bekannt. Daraus lassen sich Sonnen-Elevations und -Azimutwinkel einfach berechnen. Sollte der genaue Aufnahmezeitpunkt nicht bekannt sein, ließe sich in einem initialen Verarbeitungsschritt der Sonnenstand bestimmen, der zur Aufnahmezeit und an dem Aufnahmeort des Luftbildes bzw. der Luft Bilddaten herrscht. Dieser kann bestimmt werden, indem in den Luftbilddaten gezielt nach Schlagschatten, die als schwarze Linien mit einer bestimmten Richtung abgebildet sind, gesucht wird. Dies kann beispielsweise durch Einsatz einer Hough-Transformation oder geeigneter Gabor-Filter erleichtert werden. Vorteilhaft kann es auch sein, die Luftbilddaten zu invertieren, so dass aus den dunklen bzw. schwarzen Linien der Schlagschatten weiße bzw. helle Linien werden, die unter Umständen besser erkennbar sind.

Da die Koordinaten der Radarpasspunkte (der punktförmigen Radarsignaturen RS) bekannt sind und vorteilhaft die Luft Bilddaten ebenfalls zumindest grob georeferentziert sind, lässt sich der Suchbereich in den Luftbilddaten auf vorgegebene Umgebungen der Radarsignatur begrenzen. Die punktförmigen Radarsignaturen RS können auch zum Registrieren von zwei Radarbildern, die unter einem unterschiedlichen Winkel aufgenommen wurden (zum Beispiel zur Radargrammetrie) oder beispielsweise einem Radarbild und einem optischen Bild verwendet werden.

Das Verfahren eignet sich zur automatischen Ausführung, wobei automatisch geeignete Passpunkte (homologe Punkte bzw. miteinander korrespondierende Punkte, bspw. RS, AP) für das registrieren/Matching zwischen Luftbilddaten und Radardaten oder zwischen Radardaten und Radardaten.

Ein weiterer Aspekt der Erfindung betrifft ein Verfahren zur Georeferenzierung von bereitgestellten Luftbilddaten, die mit einem (optischen) Abbildungssystem aufgenommen wurden und in denen ein Teil der Erdoberfläche abgebildet ist, wobei eine Georeferenzierung der Luftbilddaten auf Basis bereitgestellter georeferenzierte SAR-Bilddaten erfolgt, in denen derselbe Teil der Erdoberfläche abgebildet ist.

Das Verfahren gemäß einer zweiten Alternative umfasst folgende Schritte. In einem Schritt erfolgt in den georeferenzierten SAR-Bilddaten ein Ermitteln von im Wesentlichen punktförmigen Radarsignaturen RS. In einem weiteren Schritt erfolgt ein Bereitstellen des Sonnenstandes (bspw. Azimuth/Elevation) für die Aufnahmezeit der Luftbilddaten und den darin abgebildeten Teil der Erdoberfläche. In einem weiteren Schritt erfolgt auf Basis einer gegebenen Abbildungsgeometrie des Abbildungssystems und einer bereitgestellten Position des Abbildungssystems während der Aufnahme der Luftbilddaten ein Ermitteln von länglichen, insbesondere linien- oder balkenförmigen Projektionsbildern PB von senkrecht über die Erdoberfläche sich erhebenden länglichen, mastähnlichen Objekten in den Luftbilddaten. In diesem Schritt wird also gezielt nach Abbildungen von mastähnlichen Objekten in den Luftbilddaten gesucht, wobei aufgrund der bekannten Abbildungsgeometrie bekannt ist in welcher Richtung mastähnliche längliche Objekte in den Luftbilddaten abgebildet sind.

In einem weiteren Schritt erfolgt in den Luftbilddaten basierend auf dem Sonnenstand zur Aufnahmezeit, ein Ermitteln von länglichen, insbesondere linien- oder balkenförmigen, in Sonnenstrahlrichtung erzeugten Schlagschatten SS, die von den sich über die Erdoberfläche senkrecht erhebenden länglichen mastähnlichen Objekten erzeugt werden.

In einem weiteren Schritt erfolgt ein Ermitteln von Schnittpunkten SP örtlich korrespondierender Schlagschatten SS und Projektionsbildern PB und/oder von deren jeweiligen Verlängerungen jeweils in Längsrichtung (der Schlagschatten SS und Projektionsbildern PB). Die Voraussetzung, dass ein Schlagschatten von einem sich senkrecht von der Erdoberfläche erstreckenden mastähnlichen Objekts an dessen Fußpunkt beginnt, oder dass der Fußpunkt eines sich senkrecht von der Erdoberfläche erstreckenden mastähnlichen Objekts in den Luftbilddaten erkennbar ist, ist nicht immer gegeben. So kann der Fußpunkt bzw. ein erster sich über den Erdboden erhebender Teil des mastähnlichen Objektes beispielsweise durch Grünpflanzen verdeckt sein, oder der Schlagschatten kann in einem Bereich liegen der ebenfalls dunkel abgebildet ist, sodass der Schlagschatten als solcher nicht erkennbar ist. In diesen Fällen wird in den Luftbilddaten jeweils ein V-förmiger Schnittpunkt SP zwischen Schlagschatten und dem schlagschattenerzeugenden in den Luftbilddaten abgebildeten Objekt ermittelt. Dieser Schnittpunkt SP entspricht dem Fußpunkt des sich vom Erdboden senkrecht erstreckenden mastförmigen Objekts in den Luftbilddaten.

In einem weiteren Schritt erfolgt ein Ermittelten von örtlich korrespondierenden punktförmigen Radarsignaturen RS und Schnittpunkten SP. In einem weiteren Schritt erfolgt ein Registrieren der Luftbilddaten mit den SAR-Bilddaten auf Basis der korrespondierenden Radarsignaturen RS und Schnittpunkte SP. In einem weiteren Schritt erfolgt ein Übertragen der Georeferenzierung der SAR-Bilddaten auf die mit den SAR-Bilddaten registrierten Luftbilddaten.

Dieses Verfahren unterscheidet sich somit von dem eingangs beschriebenen Verfahren erster Alternative dadurch, dass die Fußpunkte von mastförmigen, sich vom Erdboden senkrecht erstreckenden Objekten als Schnittpunkte von Schlagschatten und den abgebildeten mastförmigen Objekten selbst ermittelt werden. Vorteilhaft wird die Verlängerung der Längsachsen des jeweiligen Schlagschattens bzw. des mastförmig abgebildeten Objekts um einen Schnittpunkt SP zu erzeugen nur jeweils kleiner als ein vorgegebener Grenzwert G1 gewählt. Vorteilhaft schneiden sich im Luftbild die mastförmigen Objekte mit dem zugeordneten Schlagschatten in einem Winkel zwischen 45° und 135°.

In einer vorteilhaften Weiterbildung des vorgeschlagenen Verfahrens werden die Verfahren gemäß erste Alternative und zweite Alternative nacheinander für Fälle ausgeführt, in denen das Verfahren gemäß erste Alternative keine ausreichende Zahl von korrespondierenden Punkten RS und AP ermitteln konnte. In diesem Fall wird für die Punkte RS und AP, die noch nicht als korrespondierende Punkte erkannt sind das Verfahren gemäß zweite Alternative durchgeführt.

Eine vorteilhafte Weiterbildung des vorgeschlagenen Verfahrens nach erster oder zweiter Alternative zeichnet sich dadurch aus, dass die bereitgestellten Luftbilddaten bereits zumindest eine Grob-Georeferenzierung mit einer Georeferenzierungsgenauigkeit G_{L} [m], und die bereitgestellten georeferenzierten SAR-Bilddaten eine Georeferenzierungsgenauigkeit G_{SAR} [m] aufweisen, wobei gilt: G_{SAR} [m] < G_{L} [m],

Eine vorteilhafte Weiterbildung des vorgeschlagenen Verfahrens nach erster oder zweiter Alternative zeichnet sich dadurch aus, dass die punktförmigen Radarsignaturen Radarobjekte abbilden, die sich vom Erdboden im Wesentlichen vertikal erstrecken und beispielsweise Masten, Stangen, oder Träger sind.

Eine vorteilhafte Weiterbildung vorgeschlagenen Verfahrens nach erster oder zweiter Alternative zeichnet sich dadurch aus, dass die Radarobjekte rotationssymmetrisch sind.

Eine vorteilhafte Weiterbildung des vorgeschlagenen Verfahrens gemäß erster oder zweiter Alternative zeichnet sich dadurch aus, dass die bereitgestellten georeferenzierten SAR-Bilddaten eine Georeferenzierungsgenauigkeit G_{SAR} von ≤ 0,5 m, insbesondere ≤ 5 cm, ≤ 10 cm, ≤ 20 cm, ≤ 30 cm oder ≤ 40 cm aufweisen.

Eine vorteilhafte Weiterbildung vorgeschlagenen Verfahrens gemäß erster oder zweiter Alternative zeichnet sich dadurch aus, dass die bereitgestellten Luftbilddaten georeferenziert sind und eine Georeferenzierungsgenauigkeit G_{Luft} von ≤ 150 m insbesondere ≤ 100 m, ≤ 50 m, ≤ 20 m, ≤ 10 m aufweisen.

Eine vorteilhafte Weiterbildung des vorgeschlagenen Verfahrens gemäß erster oder zweiter Alternative zeichnet sich dadurch aus, dass in den SAR-Bilddaten nur solche im Wesentlichen punktförmigen Radarsignaturen ermittelt werden, bei denen in einer Bilddaten-Umgebung mit einem vorgegeben Radius R um einen Schwerpunkt der jeweiligen Radarsignatur keine anderen Radarsignaturen vorhanden sind.

Eine vorteilhafte Weiterbildung des vorgeschlagenen Verfahrens gemäß erster oder zweiter Alternative zeichnet sich dadurch aus, dass der Radius R abhängig von der Georeferenzierungsgenauigkeit G_{Luft} der Bereitgestellten Luftbilddaten gewählt wird: R= R(G_{L}).

Eine vorteilhafte Weiterbildung des vorgeschlagenen Verfahrens gemäß erster oder zweiter Alternative zeichnet sich dadurch aus, dass die bereitgestellten Luftbilddaten und die bereitgestellten SAR-Bilddaten jeweils 3D-Bilddaten sind.

Eine vorteilhafte Weiterbildung des vorgeschlagenen Verfahrens gemäß erster oder zweiter Alternative zeichnet sich dadurch aus, dass die georeferenzierten Luftbilddaten mit einer digitalen Straßenkarte des Teils der Erdoberfläche registriert werden, und die Georeferenzierung der Luftbilddaten auf die digitale Straßenkarte übertragen wird.

Ein weiterer Aspekt der vorliegenden Erfindung betrifft eine Vorrichtung zur Georeferenzierung von bereitgestellten Luftbilddaten, die mit einem (optischen) Abbildungssystem aufgenommen wurden und in denen ein Teil der Erdoberfläche abgebildet ist, wobei eine Georeferenzierung der Luftbilddaten auf Basis bereitgestellter georeferenzierter SAR-Bilddaten erfolgt, in denen derselbe Teil der Erdoberfläche abgebildet ist. Die vorgeschlagene Vorrichtung umfasst eine erste Auswerteeinheit, mit der in den georeferenzierten SAR-Bilddaten im Wesentlichen punktförmige Radarsignaturen RS ermittelt werden, eine erste Schnittstelle, an der der Sonnenstand (bspw. Azimuth/Elevation) für die Aufnahmezeit der Luftbilddaten und für den darin abgebildeten Teil der Erdoberfläche bereitgestellt werden, eine zweite Auswerteeinheit, mit der in den Luftbilddaten basierend auf dem Sonnenstand zur Aufnahmezeit (der Luftbilddaten), längliche, insbesondere linien- oder balkenförmige, in Sonnenstrahlrichtung erzeugte Schlagschatten SS, (die von sich über die Erdoberfläche senkrecht erhebenden länglichen mastartigen Objekten erzeugt werden) ermittelt werden, eine dritte Auswerteeinheit, mit der in den Luftbilddaten der Sonne zugewandte Anfangspunkte AP der ermittelten Schlagschatten SS ermittelt werden, eine vierte Auswerteeinheit, mit der örtlich korrespondierende punktförmige Radarsignaturen RS und Anfangspunkten AP der Schlagschatten SS ermittelt werden, eine Registriereinheit, mit der die Luftbilddaten mit den SAR-Bilddaten auf Basis der korrespondierenden Radarsignaturen RS und Anfangspunkte AP registriert werden, und eine Georeferenzierungseinheit, mit der die Georeferenzierung der SAR-Bilddaten auf die mit den SAR-Bilddaten registrierten Luftbilddaten übertragen werden.

Vorteile und vorteilhafte Weiterbildung der vorgeschlagenen Vorrichtung ergeben sich durch analoge und sinngemäße Übertragung der vorstehenden Ausführungen zu dem Verfahren gemäß erster Alternative.

Die Erfindung betrifft weiterhin eine Vorrichtung zur Georeferenzierung von bereitgestellten Luftbilddaten, die mit einem (optischen) Abbildungssystem aufgenommen wurden und in denen ein Teil der Erdoberfläche abgebildet ist, wobei eine Georeferenzierung der Luftbilddaten auf Basis bereitgestellter georeferenzierte SAR-Bilddaten erfolgt, in denen derselbe Teil der Erdoberfläche abgebildet ist.

Die vorgeschlagene Vorrichtung umfasst eine erste Auswerteeinheit, mit der in den georeferenzierten SAR-Bilddaten im Wesentlichen punktförmige Radarsignaturen RS ermittelt werden, eine erste Schnittstelle, an der der Sonnenstand (bspw. Azimuth/Elevation) für die Aufnahmezeit der Luftbilddaten und für den darin abgebildeten Teil der Erdoberfläche bereitgestellt werden, eine zweite Auswerteeinheit, mit der in den Luftbilddaten basierend auf dem Sonnenstand zur Aufnahmezeit längliche, insbesondere linien- oder balkenförmige, in Sonnenstrahlrichtung erzeugte Schlagschatten SS, die von den sich über die Erdoberfläche senkrecht erhebenden länglichen mastähnlichen Objekten erzeugt werden, ermittelt werden, eine fünfte Auswerteeinheit, mit der auf Basis einer gegebenen Abbildungsgeometrie des optischen Abbildungssystems und einer bereitgestellten Position des Abbildungssystems während der Aufnahme der Luftbilddaten längliche, insbesondere linien- oder balkenförmige Projektionsbilder PB von senkrecht über die Erdoberfläche sich erhebenden länglichen, mastähnlichen Objekten in den Luftbilddaten ermittelt werden, eine sechste Auswerteeinheit, mit der Schnittpunkte SP von örtlich korrespondierenden Schlagschatten SS und Projektionsbildern PB und/oder von deren jeweiligen Verlängerungen jeweils in Längsrichtung (der Schlagschatten SS und Projektionsbildern PB) ermittelt werden, eine siebte Auswerteeinheit, mit der örtlich korrespondierende punktförmige Radarsignaturen RS und Schnittpunkte SP ermittelt werden, eine Registriereinheit, mit der die Luftbilddaten mit den SAR-Bilddaten auf Basis der korrespondierenden Radarsignaturen RS und Schnittpunkte SP registriert werden, eine Georeferenzierungseinheit, mit der die Georeferenzierung der SAR-Bilddaten auf die mit den SAR-Bilddaten registrierten Luftbilddaten übertragen wird.

Vorteile und vorteilhafte Weiterbildung dieser Vorrichtung ergeben sich durch eine analoge und sinngemäße Übertragung der im Zusammenhang mit dem Verfahren gemäß zweite Alternative gemachten Ausführungen.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein schematisiertes Ablaufschema eines vorgeschlagenen Verfahrens gemäß erste Alternative,
- Fig. 2: eine schematisierte Darstellung zum Aufbau einer vorgeschlagenen Vorrichtung, und
- Fig. 3a: zeigt exemplarisch wie sich senkrecht vom Erdboden erstreckende Masten in senkrecht von oben aufgenommenen Luftbild (=Luftbilddaten) abgebildet werden,
- Fig. 3b: zeigt exemplarisch wie Schlagschatten der Masten von Figur 3A in Sonnenstrahlrichtung in den Luftbilddaten abgebildet werden,
- Fig. 3c: zeigt exemplarisch, wie sich Schnittpunkte aus den Schlagschatten und den die schlagschattenbildenden Masten ergeben.

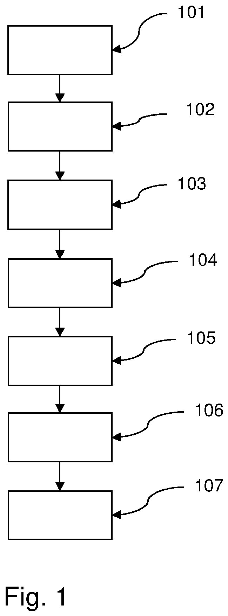

**Fig. 1** zeigt ein schematisiertes Ablaufschema eines vorgeschlagenen Verfahrens zur Georeferenzierung von bereitgestellten Luftbilddaten, die mit einem Abbildungssystem aufgenommen wurden und in denen ein Teil der Erdoberfläche abgebildet ist, wobei eine Georeferenzierung der Luftbilddaten auf Basis bereitgestellter georeferenzierter SAR-Bilddaten erfolgt, in denen derselbe Teil der Erdoberfläche abgebildet ist. Das Verfahren umfasst folgende Schritte. In einem Schritt **101** erfolgt in den georeferenzierten SAR-Bilddaten ein Ermitteln von im Wesentlichen punktförmigen Radarsignaturen RS. In einem Schritt **102** erfolgt ein Bereitstellen des Sonnenstandes für die Aufnahmezeit der Luftbilddaten und den darin abgebildeten Teil der Erdoberfläche. In einem Schritt **103** erfolgt in den Luftbilddaten basierend auf dem Sonnenstand zur Aufnahmezeit ein Ermitteln von länglichen, insbesondere linien-, balkenförmigen oder mastförmigen in Sonnenstrahlrichtung erzeugten Schlagschatten SS. In einem Schritt **104** erfolgt in den Luftbilddaten ein Ermitteln von der Sonne zugewandten Anfangspunkten AP der ermittelten Schlagschatten SS. In einem Schritt **105** erfolgt ein Ermittelten von örtlich korrespondierenden punktförmigen Radarsignaturen RS und Anfangspunkten AP der Schlagschatten SS. In einem Schritt **106** erfolgt ein Registrieren der Luftbilddaten mit den SAR-Bilddaten auf Basis der korrespondierenden Radarsignaturen RS und Anfangspunkte AP. In einem Schritt **107** erfolgt ein Übertragen der Georeferenzierung der SAR-Bilddaten auf die mit den SAR-Bilddaten registrierten Luftbilddaten.

In dem genannten Ausführungsbeispiel repräsentieren die Luftbilddaten optische Aufnahmen der Erdoberfläche mittels einer Luftbildkamera. Alternativ können die Luftbilddaten auch mit einem Radarsensor, einen Lasersensor, einen Lidarsensor oder einen anderen bildgebenden Sensor aufgenommen sein.

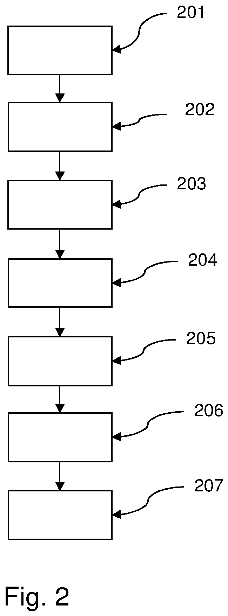

**Fig. 2** zeigt eine schematisierte Darstellung zum Aufbau einer vorgeschlagenen Vorrichtung zur Georeferenzierung von bereitgestellten Luftbilddaten, die mit einem optischen Abbildungssystem aufgenommen wurden und in denen ein Teil der Erdoberfläche abgebildet ist, wobei eine Georeferenzierung der Luftbilddaten auf Basis bereitgestellter georeferenzierter SAR-Bilddaten erfolgt, in denen derselbe Teil der Erdoberfläche abgebildet ist, umfassend: eine erste Auswerteeinheit **201**, mit der in den georeferenzierten SAR-Bilddaten im Wesentlichen punktförmige Radarsignaturen RS ermittelt werden, eine erste Schnittstelle **202**, an der der Sonnenstand für die Aufnahmezeit der Luftbilddaten und für den darin abgebildeten Teil der Erdoberfläche bereitgestellt werden, eine zweite Auswerteeinheit **203**, mit der in den Luftbilddaten basierend auf dem Sonnenstand zur Aufnahmezeit, längliche, insbesondere linien- oder balkenförmige, in Sonnenstrahlrichtung erzeugte Schlagschatten SS, ermittelt werden, eine dritte Auswerteeinheit **204**, mit der in den Luftbilddaten der Sonne zugewandte Anfangspunkte AP der ermittelten Schlagschatten SS ermittelt werden, eine vierte Auswerteeinheit **205**, mit der örtlich korrespondierende punktförmige Radarsignaturen RS und Anfangspunkten AP der Schlagschatten SS ermittelt werden, eine Registriereinheit **206**, mit der die Luftbilddaten mit den SAR-Bilddaten auf Basis der korrespondierenden Radarsignaturen RS und Anfangspunkte AP registriert werden, und eine Georeferenzierungseinheit **207**, mit der die Georeferenzierung der SAR-Bilddaten auf die mit den SAR-Bilddaten registrierten Luftbilddaten übertragen werden.

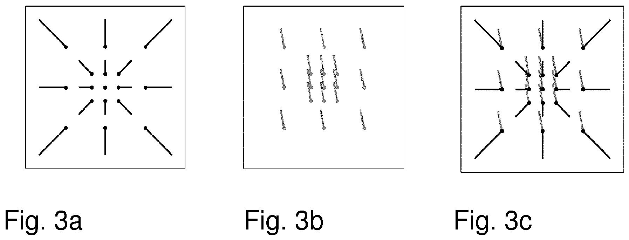

Die **Figuren 3a****-c** zeigen exemplarisch wie Masten und deren zugehörige Schlagschatten in einem senkrecht von oben aufgenommenen Luftbild (Nadiraufnahme) abgebildet werden. Dabei ist die Abbildungsgeometrie des Abbildungssystems zur Aufnahme der Luftbilddaten bekannt. **Fig. 3a** zeigt ein Beispiel für die Abbildung auf der Erdoberfläche senkrecht stehender Masten in einem senkrecht nach unten blickenden Luftbild (Mastfußpunkte sind gekennzeichnet). **Fig. 3b** zeigt ein Beispiel für die im Luftbild abgebildeten Schlagschatten der auf der Erdoberfläche senkrecht stehenden Masten von **Fig. 3** **a**. **Fig. 3c** zeigt eine Überlagerung von Masten (Fig. 3a) und Schlagschatten (Fig. 3b) im Luftbild.

Die Fußpunkte der Masten sind im Normalfall nicht direkt sichtbar, da sie oft durch Vegetation verdeckt sind. Deshalb ist es vorteilhaft den Mastfußpunkt durch den gemeinsamen Schnittpunkt des (in Längsrichtung verlängerten) Mastbildes und des (in Längsrichtung verlängerten) zugehörigen Schlagschattens zu finden.

Vorteilhaft bilden die Masten im Luftbild mit ihren Schlagschatten einen Winkel zwischen 45° und 135°, um die Bestimmung des Schnittpunkts mit maximal tolerierbarem Fehler zu erlauben. Eine vorzugsweise verwendete Luftbildkamera erlaubt verschiedene Konfigurationen:
- Einbau in Flugrichtung: "Links"-Kamera schaut nach vorne mit einem Off-Nadir-Winkel zwischen 30° und 55°, "Nadir"-Kamera nach unten und "Rechts"-Kamera nach hinten ebenfalls mit einem Off-Nadir-Winkel zwischen 30° und 55°
- Einbau quer zur Flugrichtung: "Links"-Kamera schaut nach links mit einem Off-Nadir-Winkel zwischen 30° und 55°, "Nadir"-Kamera nach unten und "Rechts"-Kamera nach rechts ebenfalls mit einem Off-Nadir-Winkel zwischen 30° und 55°
- Abgesenkt quer zur Flugrichtung: "Links"-Kamera schaut nach links mit einem Off-Nadir-Winkel von ca. 0-5° bis 20-25°, "Rechts"-Kamera schaut nach rechts mit einem Off-Nadir-Winkel von ca. 0-5° bis 20-25°, beide Kameras haben im Nadir einen kleinen Überlapp

Dazu kommt, dass um ein Höhenmodell zu berechnen, die Bilder der Nadir-Kamera einen Überlapp in Flugrichtung von ca. 80 % und die Streifen der Nadirbilder untereinander (also quer zur Flugrichtung) einen Überlapp von 20 % benötigen. Der Überlapp in Flugrichtung von 80 % erfordert eine hohe Bildauslösefrequenz, die bei zu niedrigen Flughöhen (unter 500 m über Grund) unter Umständen nicht mehr erreicht werden kann. Ebenso verlangt der Einbau in Flugrichtung aufgrund der benötigten Überlapps zu viele Streifen. Höhenmodelle können nur aus Nadir-Bildern oder Bildern mit relativ kleinen Off-Nadir-Winkeln bis ca. 25° abgeleitet werden. Deshalb wird für die reine Befliegung zur Ermittlung von (Gelände-)Höhenmodellen die abgesenkte Konfiguration bevorzugt, da hier ein doppelt breiter Streifen auf einmal erfasst werden kann. Untersuchungen haben jedoch ergeben, dass sich die Links/Rechts-Bilder in der abgesenkten Konfiguration nicht für die Detektion von Masten in den Bildern eignen, da diese zu sehr Nadir gesehen und nicht extrahiert werden können.

Für die Befliegungen zur Erfassung von Luftbilddaten sind beispielsweise folgende Rahmenbedingungen zu bevorzugen (alle Zeitangaben in Winterzeit):
- Einbau des 3K-Kamerasystems quer zur Flugrichtung.
- Maximal angehobene Seitblickkameras (30°-55°) - Bilder, die zur Detektion von Masten verwendet werden sollen, sollten idealerweise einen Off-Nadir-Winkel von 40°±10° haben. Bei zu großen Off-Nadir-Winkeln wird die Bildauflösung zu schlecht, bei zu niedrigen ist das Bild des Mastes zu kurz um detektiert werden zu können.
- Flugzeit möglichst nicht zu früh oder zu spät - ideal sind 2 Stunden um die Mittagszeit - um zu lange Schatten in den Bildern zu vermeiden, die Masten und Mastschatten überdecken könnten.
- Flugrichtung in Schattenrichtung (bei Quereinbau) oder maximal ±45° schräg zur Schattenrichtung. Bei vorgegebener Flugrichtung ergibt sich also die Flugzeit aus der Schattenrichtung (= Flugrichtung) ± 3 Stunden. Für sich ergebende Flugzeiten sollten eher Flugzeiten näher zur Mittagszeit aufgrund der kürzeren Schatten gewählt werden.
- Nadirkamera sollte gesamtes Gebiet abdecken, um ein Geländehöhenmodell erstellen zu können. Dabei ist ein Überlapp in Flugrichtung von 80 % und zwischen den Streifen (quer zur Flugrichtung) von 20 % nötig.
- Jedes Nadir-Bild muss zusätzlich von mindestens einem der Seitblick-Bilder abgedeckt sein, um potentielle Masten darin zu detektieren. Dies sollte bei parallelen Streifen aber eigentlich immer der Fall sein - hier sind alle Nadir-Bilder sogar von zwei Seitblick-Bildern abgedeckt bis auf diejenigen des ersten und des letzten Streifens.
- Die räumliche Auflösung der Luftbilder (=Luftbilddaten) sollte nicht viel schlechter als 10 cm sein, da neben den Masten auch Mittellinien und Seitenstreifen detektiert werden müssen. Die entspricht einer Flughöhe um 600 über Grund.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 101 -111: Verfahrensschritte
- 201: erste Auswerteeinheit
- 202: erste Schnittstelle
- 203: zweite Auswerteeinheit
- 204: dritte Auswerteeinheit
- 205: vierte Auswerteeinheit
- 206: Registriereinheit
- 207: Georeferenzierungseinheit

## Patentansprüche

1. Verfahren zur Georeferenzierung von bereitgestellten Luftbilddaten, die mit einem Abbildungssystem aufgenommen wurden und in denen ein Teil der Erdoberfläche abgebildet ist, wobei eine Georeferenzierung der Luftbilddaten auf Basis bereitgestellter georeferenzierter SAR-Bilddaten erfolgt, in denen derselbe Teil der Erdoberfläche abgebildet ist,
**gekennzeichnet durch** folgende Schritte:
- in den georeferenzierten SAR-Bilddaten Ermitteln (101) von im Wesentlichen punktförmigen Radarsignaturen RS,
- Bereitstellen (102) des Sonnenstandes für die Aufnahmezeit der Luftbilddaten und den darin abgebildeten Teil der Erdoberfläche,
- in den Luftbilddaten basierend auf dem Sonnenstand zur Aufnahmezeit, Ermitteln (103) von länglichen, insbesondere linien- oder balkenförmigen, in Sonnenstrahlrichtung erzeugten Schlagschatten SS,
- in den Luftbilddaten Ermitteln (104) von der Sonne zugewandten Anfangspunkten AP der ermittelten Schlagschatten SS,
- Ermittelten (105) von örtlich korrespondierenden punktförmigen Radarsignaturen RS und Anfangspunkten AP der Schlagschatten SS,
- Registrieren (106) der Luftbilddaten mit den SAR-Bilddaten auf Basis der korrespondierenden Radarsignaturen RS und Anfangspunkte AP,
- Übertragen (107) der Georeferenzierung der SAR-Bilddaten auf die mit den SAR-Bilddaten registrierten Luftbilddaten.

2. Verfahren zur Georeferenzierung von bereitgestellten Luftbilddaten, die mit einem Abbildungssystem aufgenommen wurden und in denen ein Teil der Erdoberfläche abgebildet ist, wobei eine Georeferenzierung der Luftbilddaten auf Basis bereitgestellter georeferenzierte SAR-Bilddaten erfolgt, in denen derselbe Teil der Erdoberfläche abgebildet ist,
**gekennzeichnet durch** folgende Schritte:
- in den georeferenzierten SAR-Bilddaten Ermitteln (101) von im Wesentlichen punktförmigen Radarsignaturen RS,
- Bereitstellen (102) des Sonnenstandes für die Aufnahmezeit der Luftbilddaten und den darin abgebildeten Teil der Erdoberfläche,
- auf Basis einer gegebenen Abbildungsgeometrie des optischen Abbildungssystems und einer bereitgestellten Position des Abbildungssystems während der Aufnahme der Luftbilddaten, Ermitteln (108) von länglichen, insbesondere linien- oder balkenförmigen Projektionsbildern PB von senkrecht über die Erdoberfläche sich erhebenden länglichen, mastähnlichen Objekten in den Luftbilddaten,
- in den Luftbilddaten basierend auf dem Sonnenstand zur Aufnahmezeit, Ermitteln (103) von länglichen, insbesondere linien- oder balkenförmigen, in Sonnenstrahlrichtung erzeugten Schlagschatten SS,
- Ermitteln (109) von Schnittpunkten SP örtlich korrespondierender Schlagschatten SS und Projektionsbildern PB und/oder von deren jeweiligen Verlängerungen jeweils in Längsrichtung,
- Ermittelten (110) von örtlich korrespondierender punktförmigen Radarsignaturen RS und Schnittpunkten SP,
- Registrieren (111) der Luftbilddaten mit den SAR-Bilddaten auf Basis der korrespondierenden Radarsignaturen RS und Schnittpunkte SP,
- Übertragen (107) der Georeferenzierung der SAR-Bilddaten auf die mit den SAR-Bilddaten registrierten Luftbilddaten.

3. Verfahren nach Anspruch 1 oder 2,
**dadurch gekennzeichnet, dass** die bereitgestellten Luftbilddaten bereits zumindest eine Grob-Georeferenzierung mit einer Georeferenzierungsgenauigkeit G_{L} [m], und die bereitgestellten georeferenzierten SAR-Bilddaten eine Georeferenzierungsgenauigkeit G_{SAR} [m] aufweisen, wobei gilt: G_{SAR} [m] < G_{L} [m],

4. Verfahren nach einem der Ansprüche 1 bis 3,
**dadurch gekennzeichnet, dass** die punktförmigen Radarsignaturen Radarobjekte abbilden, die sich vom Erdboden im Wesentlichen vertikal erstrecken und beispielsweise Masten, Stangen, oder Träger sind.

5. Verfahren nach einem der Ansprüche 1 bis 4,
**dadurch gekennzeichnet, dass** die bereitgestellten georeferenzierten SAR-Bilddaten eine Georeferenzierungsgenauigkeit G_{SAR} von ≤ 0,5 m, insbesondere ≤ 5 cm, ≤ 10 cm, ≤ 20 cm, ≤ 30 cm oder ≤ 40 cm aufweisen.

6. Verfahren nach einem der Ansprüche 1 bis 5,
**dadurch gekennzeichnet, dass** die bereitgestellten Luftbilddaten georeferenziert sind und eine Georeferenzierungsgenauigkeit G_{Luft} von ≤ 150 m insbesondere ≤ 100 m, ≤ 50 m, ≤ 20 m, ≤ 10 m aufweisen.

7. Verfahren nach einem der Ansprüche 1 bis 6,
**dadurch gekennzeichnet, dass** in den SAR-Bilddaten nur solche im Wesentlichen punktförmigen Radarsignaturen ermittelt werden, bei denen in einer Bilddaten-Umgebung mit einem vorgegeben Radius R um einen Schwerpunkt der jeweiligen Radarsignatur keine anderen Radarsignaturen vorhanden sind.

8. Verfahren nach Anspruch 7,
**dadurch gekennzeichnet, dass** der Radius R abhängig von der Georeferenzierungsgenauigkeit G_{Luft} der Bereitgestellten Luftbilddaten gewählt wird: R= R(G_{L}).

9. Vorrichtung zur Georeferenzierung von bereitgestellten Luftbilddaten, die mit einem optischen Abbildungssystem aufgenommen wurden und in denen ein Teil der Erdoberfläche abgebildet ist, wobei eine Georeferenzierung der Luftbilddaten auf Basis bereitgestellter georeferenzierte SAR-Bilddaten erfolgt, in denen derselbe Teil der Erdoberfläche abgebildet ist,
umfassend:
- eine erste Auswerteeinheit (201), mit der in den georeferenzierten SAR-Bilddaten im Wesentlichen punktförmige Radarsignaturen RS ermittelt werden,
- eine erste Schnittstelle (202), an der der Sonnenstand für die Aufnahmezeit der Luftbilddaten und für den darin abgebildeten Teil der Erdoberfläche bereitgestellt werden,
- eine zweite Auswerteeinheit (203), mit der in den Luftbilddaten basierend auf dem Sonnenstand zur Aufnahmezeit, längliche, insbesondere linien- oder balkenförmige, in Sonnenstrahlrichtung erzeugte Schlagschatten SS, ermittelt werden,
- eine dritte Auswerteeinheit (204), mit der in den Luftbilddaten der Sonne zugewandte Anfangspunkte AP der ermittelten Schlagschatten SS ermittelt werden,
- eine vierte Auswerteeinheit (205), mit der örtlich korrespondierende punktförmige Radarsignaturen RS und Anfangspunkte AP der Schlagschatten SS ermittelt werden,
- eine Registriereinheit (206), mit der die Luftbilddaten mit den SAR-Bilddaten auf Basis der korrespondierenden Radarsignaturen RS und Anfangspunkte AP registriert werden, und
- eine Georeferenzierungseinheit (207), mit der die Georeferenzierung der SAR-Bilddaten auf die mit den SAR-Bilddaten registrierten Luftbilddaten übertragen werden.

10. Vorrichtung zur Georeferenzierung von bereitgestellten Luftbilddaten, die mit einem optischen Abbildungssystem aufgenommen wurden und in denen ein Teil der Erdoberfläche abgebildet ist, wobei eine Georeferenzierung der Luftbilddaten auf Basis bereitgestellter georeferenzierter SAR-Bilddaten erfolgt, in denen derselbe Teil der Erdoberfläche abgebildet ist, umfassend:
- eine erste Auswerteeinheit (201), mit der in den georeferenzierten SAR-Bilddaten im Wesentlichen punktförmige Radarsignaturen RS ermittelt werden,
- eine erste Schnittstelle (202), an der der Sonnenstand für die Aufnahmezeit der Luftbilddaten und für den darin abgebildeten Teil der Erdoberfläche bereitgestellt werden,
- eine zweite Auswerteeinheit (203), mit der in den Luftbilddaten basierend auf dem Sonnenstand zur Aufnahmezeit längliche, insbesondere linien- oder balkenförmige, in Sonnenstrahlrichtung erzeugte Schlagschatten SS, ermittelt werden,
- eine fünfte Auswerteeinheit (208), mit der auf Basis einer gegebenen Abbildungsgeometrie des optischen Abbildungssystems und einer bereitgestellten Position des Abbildungssystems während der Aufnahme der Luftbilddaten längliche, insbesondere linien- oder balkenförmige Projektionsbilder PB von senkrecht über die Erdoberfläche sich erhebenden länglichen, mastähnlichen Objekten in den Luftbilddaten ermittelt werden,
- eine sechste Auswerteeinheit (209), mit der Schnittpunkte SP von örtlich korrespondierenden Schlagschatten SS und Projektionsbildern PB und/oder von deren jeweiligen Verlängerungen jeweils in Längsrichtung ermittelt werden,
- eine siebte Auswerteeinheit (210), mit der örtlich korrespondierende punktförmige Radarsignaturen RS und Schnittpunkte SP ermittelt werden,
- eine Registriereinheit (211), mit der die Luftbilddaten mit den SAR-Bilddaten auf Basis der korrespondierenden Radarsignaturen RS und Schnittpunkte SP registriert werden,
- eine Georeferenzierungseinheit (207), mit der die Georeferenzierung der SAR-Bilddaten auf die mit den SAR-Bilddaten registrierten Luftbilddaten übertragen wird.

## Claims

1. A method for geo-referencing provided aerial image data, which have been recorded by an imaging system and in which a part of the earth's surface is imaged, wherein geo-referencing of the provided aerial image data is carried out based on provided geo-referenced SAR image data in which the same part of the earth's surface is imaged,
**characterized by** the following steps:
- determining (101) substantially point-shaped radar signatures RS in the geo-referenced SAR image data;
- providing (102) the sun position for the recording time of the provided aerial image data and the part of the earth's surface imaged therein;
- determining (103) elongated, in particular line- or bar-shaped, cast shadows SS generated in the direction of solar radiation in the supplied aerial image data based on the sun position at the time of recording;
- determining (104), in the provided aerial image data, initial points AP facing the sun of the determined elongated cast shadows SS;
- determining (105) locally corresponding point-shaped radar signatures RS and the initial points AP of the elongated cast shadows SS;
- registering (106) the aerial image data with the SAR image data based on the corresponding radar signatures RS and the initial points AP; and
- transferring (107) the geo-referencing of the SAR image data to the aerial image data registered with the SAR image data.

2. The method for geo-referencing provided aerial image data, which have been recorded by an imaging system and in which a part of the earth's surface is imaged, wherein geo-referencing of the provided aerial image data is carried out based on provided geo-referenced SAR image data in which the same part of the earth's surface is imaged,
**characterized by** the following steps:
- determining (101) substantially point-shaped radar signatures RS in the geo-referenced SAR image data;
- providing (102) the sun position for the recording time of the provided aerial image data and the part of the earth's surface imaged therein;
- based on a given imaging geometry of the optical imaging system and a provided position of the imaging system during the recording of the aerial image data, determining (108) elongated, in particular line- or bar-shaped projection images PB of elongated, mast-like objects rising vertically above the earth's surface in the aerial image data,
- determining (103) elongated, in particular line- or bar-shaped, cast shadows SS generated in the direction of solar radiation in the supplied aerial image data based on the sun position at the time of recording;
- determining (109) intersections SP of locally corresponding cast shadows SS and projection images PB and/or of their respective extensions in each case in the longitudinal direction,
- determining (110) locally corresponding point-shaped radar signatures RS and intersections SP,
- registering (111) the aerial image data with the SAR image data based on the corresponding radar signatures RS and intersection points SP,
- transferring (107) the geo-referencing of the SAR image data to the aerial image data registered with the SAR image data.

3. The method according to claim 1 or 2,
**characterized in that** the provided aerial image data already have at least one rough geo-referencing with a geo-referencing accuracy G_{L}[m], and the provided geo-referenced SAR image data have a geo-referencing accuracy G_{SAR}[m], wherein: G_{SAR}[m] < G_{L}[m].

4. The method according to any one of claims 1 to 3,
**characterized in that** the point-shaped radar signatures image radar objects extending substantially vertically from the earth's surface and are masts, poles or beams.

5. The method according to any one of claims 1 to 4,
**characterized in that** the provided geo-referenced SAR image data have a geo-referencing accuracy G_{SAR} ≤ 0.5 m, in particular ≤ 5 cm, ≤ 10 cm, ≤ 20 cm, ≤ 30 cm or ≤ 40 cm.

6. The method according to any one of claims 1 to 5,
**characterized in that** the provided aerial image data are geo-referenced and have a geo-referencing accuracy G_{AIR} ≤ 150 m, in particular ≤ 100 m, ≤50 m, ≤20 m, ≤10 m.

7. The method according to any one of claims 1 to 6,
**characterized in that** in the SAR image data only those substantially point-shaped radar signatures are determined for which no other radar signatures are present in an image data environment with a given radius R about a center of gravity of the respective radar signature.

8. The method according to claim 7,
**characterized in that** the radius R is chosen depending on the geo-referencing accuracy G_{AIR} of the provided aerial image data: R = R(G_{L}).

9. A device for geo-referencing provided aerial image data, which has been recorded by an imaging system and in which a part of the earth's surface is imaged, wherein geo-referencing of the provided aerial image data is carried out based on provided geo-referenced SAR image data in which the same part of the earth's surface is imaged,
comprising:
- a first evaluating unit (201) with which substantially point-shaped radar signatures RS are determined in the geo-referenced SAR image data;
- a first interface (202) at which a sun position for the recording time of the provided aerial image data and for the part of the earth's surface imaged therein is provided;
- a second evaluating unit (203) with which elongated, in particular line- or bar-shaped, cast shadows SS generated in the direction of solar radiation are determined in the provided aerial image data based on the sun position at the time of recording;
- a third evaluating unit (204) with which initial points AP facing the sun of the determined elongated cast shadows SS are determined in the aerial image data;
- a fourth evaluating unit (205) with which locally corresponding point-shaped radar signatures RS and initial points AP of the elongated cast shadows SS are determined;
- a registering unit (206) with which the aerial image data are registered with the geo-referenced SAR image data based on the corresponding radar signatures RS and initial points AP; and
- a geo-referencing unit (207) with which the geo-referencing of the SAR image data are transferred to the aerial image data registered with the geo-referenced SAR image data.

10. The device for geo-referencing provided aerial image data which have been recorded by an imaging system and in which a part of the earth's surface is imaged, wherein the geo-referencing of the provided aerial image data is carried out based on provided geo-referenced SAR image data in which the same part of the earth's surface is imaged,
comprising:
- a first evaluating unit (201) with which substantially point-shaped radar signatures RS are determined in the geo-referenced SAR image data;
- a first interface (202) at which a sun position for the recording time of the provided aerial image data and for the part of the earth's surface imaged therein is provided;
- a second evaluating unit (203) with which elongated cast shadows SS generated in the direction of solar radiation are determined in the provided aerial image data based on the sun position at the time of recording;
- a fifth a fifth evaluating unit (208) with which, based on a given imaging geometry of the optical imaging system and a provided position of the imaging system during the recording of the aerial image data, elongated, in particular line- or bar-shaped, projection images PB of elongated, mast-like objects rising vertically above the earth's surface are determined in the aerial image data,
- a sixth evaluating unit (209) with which intersecting points SP of locally corresponding cast shadows SS and projection images PB and/or their respective extensions are determined in each case in the longitudinal direction;
- a seventh evaluating unit (210) with which locally corresponding point-shaped radar signatures RS and intersecting points SP are determined;
- a registering unit (211) with which the aerial image data are registered with the SAR image data based on the corresponding point-shaped radar signatures RS and the intersecting points SP; and
- a geo-referencing unit (207) with which the geo-referencing of the SAR image data are transferred to the aerial image data registered with the SAR image data.

## Revendications

1. Procédé, destiné au géoréférencement de vues aériennes mises à disposition, qui ont été enregistrées par un système d'imagerie et dans lesquelles une partie de la surface terrestre est reproduite, un géoréférencement des vues aériennes s'effectuant sur la base de données d'image SAR géoréférencées mises à disposition, dans lesquelles est reproduite la même partie de la surface terrestre,
**caractérisé par** les étapes suivantes, consistant à :
- dans les données d'image SAR géoréférencées, déterminer (101) des signatures radar RS de forme sensiblement ponctuelle,
- mettre à disposition (102) la position du soleil pour la durée d'enregistrement des vues aériennes et de la partie de la surface terrestre qui y est reproduite,
- dans les vues aériennes, sur la base de la position du soleil pour la durée d'enregistrement, déterminer (103) des ombres SS allongées, notamment en forme de lignes ou de barres, générées dans la direction du rayonnement solaire,
- dans les vues aériennes, déterminer (104) des points de départ AP qui font face au soleil des ombres SS déterminées,
- déterminer (105) des signatures radar RS de forme ponctuelle et des points de départ AP des ombres SS localement correspondants,
- enregistrer (106) les vues aériennes avec les données d'image SAR sur la base des signatures radar RS et points de départ AP correspondants,
- transmettre (107) le géoréférencement des données d'image SAR sur les vues aériennes enregistrées avec les données d'image SAR.

2. Procédé, destiné au géoréférencement de vues aériennes mises à disposition, qui ont été enregistrées par un système d'imagerie et dans lesquelles une partie de la surface terrestre est reproduite, un géoréférencement des vues aériennes s'effectuant sur la base de données d'image SAR géoréférencées mises à disposition, dans lesquelles est reproduite la même partie de la surface terrestre,
**caractérisé par** les étapes suivantes, consistant à :
- dans les données d'image SAR géoréférencées, déterminer (101) des signatures radar RS de forme sensiblement ponctuelle,
- mettre à disposition (102) la position du soleil pour la durée d'enregistrement des vues aériennes et de la partie de la surface terrestre qui y est reproduite,
- sur la base d'une géométrie de reproduction donnée du système de reproduction optique et d'une position mise à disposition du système de reproduction pendant l'enregistrement des vues aériennes, déterminer (108) des images de projection PB allongées, en forme de lignes ou de barres, à la perpendiculaire d'objets en forme de mâts s'élevant à la verticale au-dessus de la surface terrestre dans les vues aériennes,
- dans les vues aériennes, sur la base de la position du soleil pendant la période d'enregistrement, déterminer (103) des ombres SS allongées, notamment en forme de lignes ou de barres, dans la direction du rayonnement solaire,
- déterminer (109) des points d'intersection SP d'ombres SS et d'images de projection PB localement correspondants et/ou de leurs prolongements respectifs, respectivement dans la direction longitudinale,
- déterminer (110) des signatures radar RS de forme ponctuelle et des points d'intersection SP, localement correspondants,
- enregistrer (111) les vues aériennes avec les données d'image SAR sur la base des signatures radar RS et points d'intersection SP correspondants,
- transmettre (107) le géoréférencement des données d'image SAR sur les vues aériennes enregistrées avec les données d'image SAR.

3. Procédé selon la revendication 1 ou 2,
**caractérisé en ce que** les vues aériennes mises à disposition comportent déjà au moins un géoréférencement grossier d'une précision de géoréférencement G_{L} [m], et les données d'image SAR géoréférencées mises à disposition font preuve d'une précision de géoréférencement G_{SAR} [m], étant applicable : G_{SAR} [m] < G_{L}[m].

4. Procédé selon l'une quelconque des revendications 1 à 3,
**caractérisé en ce que** les signatures radar de forme ponctuelle reproduisent des objets radar qui s'étendent sensiblement à la verticale à partir du sol et qui sont par exemple des mâts, des perches ou des supports.

5. Procédé selon l'une quelconque des revendications 1 à 4,
**caractérisé en ce que** données d'image SAR géoréférencées mises à disposition font preuve d'une précision de géoréférencement G_{SAR} ≤ 0,5 m, notamment ≤ 5 cm, ≤ 10 cm, ≤ 20 cm, ≤ 30 cm ou ≤ 40 cm.

6. Procédé selon l'une quelconque des revendications 1 à 5,
**caractérisé en ce que** les vues aériennes mises à disposition sont géoréférencées et font preuve d'une précision de géoréférencement G_{Luft} ≤ 150 m notamment ≤ 100 m, ≤ 50 m, ≤ 20 m, ≤ 10 m.

7. Procédé selon l'une quelconque des revendications 1 à 6,
**caractérisé en ce que** dans les données d'image SAR ne sont déterminées que les signatures radar de forme sensiblement ponctuelle pour lesquelles dans un environnement de données d'image d'un rayon R prédéfini autour d'un centre de gravité de la signature radar concernée, aucune autre signature radar n'est présente.

8. Procédé selon la revendication 7,
**caractérisé en ce que** le rayon R est sélectionné en fonction de la précision de géoréférencement G_{Luft} des vues aériennes mises à disposition : R = R(G_{L}).

9. Dispositif, destiné au géoréférencement de vues aériennes mises à disposition, qui ont été enregistrées avec un système d'imagerie optique et dans lesquelles est reproduite une partie de la surface terrestre, un géoréférencement des vues aériennes s'effectuant sur la base de données d'image SAR géoréférencées mises à disposition dans lesquelles est reproduite la même partie de la surface terrestre,
comprenant :
- une première unité d'évaluation (201), à l'aide de laquelle dans les données d'image SAR géoréférencées sont déterminées des signatures radar RS de forme sensiblement ponctuelle,
- une première interface (202), sur laquelle la position du soleil pour la période d'enregistrement des vues aériennes et de la partie qui y est reproduite de la surface terrestre est mise à disposition,
- une deuxième unité d'évaluation (203), avec laquelle dans les vues aériennes, sur la base de la position du soleil pendant la période d'enregistrement, des ombres SS de forme allongée, notamment en forme de lignes ou de barres générées dans la direction du rayonnement solaire sont déterminées,
- une troisième unité d'évaluation (204), à l'aide de laquelle sont déterminés dans les vues aériennes des points de départ AP des ombres SS déterminées qui font face au soleil,
- une quatrième unité d'évaluation (205), à l'aide de laquelle sont déterminés des signatures radar RS de forme ponctuelle et des points de départ AP correspondants des ombres SS,
- une unité d'enregistrement (206), à l'aide de laquelle les vues aériennes avec les données d'image SAR sont enregistrées sur la base des signatures radar RS et points de départ AP correspondant, et
- une unité de géoréférencement (207), à l'aide de laquelle le géoréférencement des données d'image SAR est transmis sur les vues aériennes enregistrées avec les données d'image SAR.

10. Dispositif, destiné au géoréférencement de vues aériennes mises à disposition, qui ont été enregistrées avec un système d'imagerie optique et dans lesquelles est reproduite une partie de la surface terrestre, un géoréférencement des vues aériennes s'effectuant sur la base de données d'image SAR géoréférencées mises à disposition dans lesquelles est reproduite la même partie de la surface terrestre,
comprenant:
- une première unité d'évaluation (201), à l'aide de laquelle dans les données d'image SAR géoréférencées sont déterminées des signatures radar RS de forme sensiblement ponctuelle,
- une première interface (202), sur laquelle la position du soleil pour la période d'enregistrement des vues aériennes et de la partie qui y est reproduite de la surface terrestre est mise à disposition,
- une deuxième unité d'évaluation (203), avec laquelle dans les vues aériennes, sur la base de la position du soleil pendant la période d'enregistrement, des ombres SS de forme allongée, notamment en forme de lignes ou de barres générées dans la direction du rayonnement solaire sont déterminées,
- une cinquième unité d'évaluation (208), à l'aide de laquelle sur la base d'une géométrie de reproduction donnée du système de reproduction optique et d'une position du système de reproduction mise à disposition, pendant l'enregistrement des vues aériennes, des images de projection PB allongées, notamment en forme de lignes ou de barres d'objets en forme de mâts s'élevant à la perpendiculaire au-dessus de la surface terrestre sont déterminées dans les vues aériennes,
- une sixième unité d'évaluation (209), à l'aide de laquelle des points d'intersection SP d'ombres SS et images de projection PB localement correspondants et/ou de leurs prolongements respectifs sont déterminés respectivement dans la direction longitudinale,
- une septième unité d'évaluation (210), à l'aide de laquelle des signatures radar RS de forme ponctuelle et points d'intersection SP localement correspondants sont déterminés,
- une unité d'enregistrement (211), à l'aide de laquelle les vues aériennes avec les données d'image SAR sont enregistrées sur la base des signatures radar RS et points d'intersection SP correspondants,
- une unité de géoréférencement (207), à l'aide de laquelle le géoréférencement des données d'image SAR est transmis sur les vues aériennes enregistrées avec les données d'image SAR.
